# EUROPÄISCHE PATENTSCHRIFT

(11) **EP 3 374 047 B1**
(45) Veröffentlichungstag und Bekanntmachung des Hinweises auf die Patenterteilung: **15.04.2020**
(21) Anmeldenummer: 16777903.2
(22) Anmeldetag: 23.09.2016
(51) Int. Cl.: B01D 19/00, B01D 63/06, B01D 63/08, F15B 21/04, F16H 61/4174, B60K 6/12

(54) **ENTGASUNGSVORRICHTUNG**
DEGASIFYING APPARATUS
DISPOSITIF DE DÉGAZAGE

(30) Priorität: 10.11.2015 DE 102015014496
(43) Veröffentlichungstag der Anmeldung: 19.09.2018
(73) Patentinhaber: Hydac Technology GmbH, 66280 Sulzbach/Saar (DE)
(72) Erfinder: KÖHNE, Jens, Holger, 66111 Saarbrücken (DE); KLOFT, Peter, 56235 Ransbach-Baumbach (DE); BALTES, Herbert, 66679 Losheim (DE)
(74) Vertreter: Bartels, Martin Erich Arthur
(86) Internationale Anmeldenummer: PCT/EP2016/001595
(87) Internationale Veröffentlichungsnummer: WO 2017/080626

(56) Entgegenhaltungen:
- DE-A1-102013 210 417
- DE-B3-102008 062 836
- JP-A- H09 262 406
- US-A1- 2010 132 545

## Beschreibung

Die Erfindung betrifft eine Entgasungsvorrichtung zum Entfernen von Gasen, wie Umgebungsluft, aus Fluiden, wie Öl, mit den Merkmalen im Oberbegriff von Anspruch 1.

In Druckfluiden, wie Hydraulikölen, kann Luft in gelöster und in ungelöster Form vorliegen. Gelöste Luft ist im Öl nicht sichtbar, aber immer zu einem gewissen Anteil vorhanden. Ungelöst ist Luft im Öl nicht immer vorliegend, ist aber, falls vorhanden, als zweite Phase sichtbar. Die Eigenschaften von Druckfluiden, wie Viskosität, Kompressionsmodul und Schmierfähigkeit, werden maßgeblich durch ungelöste Luft beeinträchtigt, jedoch beeinflusst Luft in gelöster Form auch bestimmte Eigenschaften des Druckfluids, beispielsweise das Alterungsverhalten und die Kavitationsneigung.

Die Menge an Luft, die maximal im betreffenden Öl gelöst werden kann, bestimmt sich durch die Sättigungskurve des jeweiligen Öls. Prinzipiell steigt aber die Löslichkeit mit steigendem Druck und ist in geringerem Maße auch von der Temperatur abhängig. Da sich in Hydrauliksystemen die Drücke und Temperaturen sowohl zeitlich als auch örtlich ändern, kann es beim Absinken des Drucks und damit der Löslichkeitsgrenze zu einem Herauslösen von Luft während des Betriebs kommen. Besonders in Bereichen mit geringem statischen Druck, z.B. in Steuerquerschnitten von Ventilen, ist dadurch die Ausbildung einer zweiten Phase (Bläschen) und daher das Entstehen von Schäden zu erwarten, beispielsweise durch Strömungskavitation. Weil die Ausscheidungsgeschwindigkeit größer als die Lösungsgeschwindigkeit ist, bleiben entstandene Luftbläschen auch bei erneutem Druckanstieg im Öl bestehen, wodurch sich zum einen die Eigenschaften der Druckflüssigkeit verändern und es zum anderen bei einem nachfolgenden Druckanstieg zu Schäden durch Kavitationserosion kommen kann. Um einen sicheren Betrieb von Hydrauliksystemen zu gewährleisten, müssen daher Maßnahmen zur Entgasung des Druckfluids getroffen werden. Um eine besonders wirksame Entgasung zu erreichen, bei der das entgaste Fluid lediglich eine geringe Restkontamination enthält, wird derzeit das Verfahren der Vakuumverdampfung angewendet. Dieses hat zwar den Vorteil, dass gleichzeitig auch eine Entwässerung stattfindet, nachteilig sind jedoch der sehr hohe Energiebedarf und der aufwendige Aufbau der Vorrichtung. Zudem erfolgt meist eine unerwünschte Erhitzung des Öls, und es ist nicht möglich, die Entgasungsvorrichtung in einen Fluid-Hauptstrom des Fluidsystems zu integrieren.

Die gattungsgemäße US 2010/0132545 A1 offenbart eine Entgasungsvorrichtung zum Entfernen von Gasen aus Fluiden, bestehend aus mindestens einer permeablen Membran, die das aus dem Fluid zu entfernende Gas durchlässt und den Flüssigkeitsanteil des Fluids zurückhält, wobei ein Niederdruck- und ein Hochdruck-Hydrospeicher vorgesehen ist, die als Energie-Rückgewinnungseinrichtung gasseitig an einen hydrostatischen Antrieb angeschlossen sind, und wobei die permeable Membran eine Entgasung des Fluids auf der Niederdruckseite der Energie-Rückgewinnungseinrichtung vornimmt.

Eine weitere Entgasungsvorrichtung geht aus der JP H09-262406 hervor. Die DE 10 2013 210 417 A1 zeigt ein Verfahren zur Behandlung eines Hydraulikfluids auf. Aus der DE 10 2008 062 836 B3 geht ein hydrostatisches Antriebssystem hervor.

Ausgehend von diesem Stand der Technik stellt sich die Erfindung die Aufgabe, eine einfache und wirtschaftlich betreibbare Entgasungsvorrichtung für Fluide, wie Hydrauliköl, zur Verfügung zu stellen.

Erfindungsgemäß ist diese Aufgabe durch eine Entgasungsvorrichtung gelöst, die die Merkmale des Patentanspruchs 1 in seiner Gesamtheit aufweist.

Gemäß dem Kennzeichen des Anspruchs 1 ist vorgesehen, dass die Niederdruckseite der Energie-Rückgewinnungseinrichtung an den Behälter mit der permeablen Membran auf seiner Fluideingangsseite angeschlossen ist und die Flüssigkeitsausgangsseite des Behälters an eine Fördereinrichtung in Form einer federbelasteten Differential-Kolbenpumpe oder einer Venturidüse angeschlossen ist. Dergestalt bildet die Entgasungsvorrichtung einen Bypass zur Niederdruckseite der Energie-Rückgewinnungseinrichtung.

Für die Entgasung ist ein Permeationsprozess vorgesehen, der durch eine Membran stattfindet. Dabei wird zur Trennung eine dichte Membran ohne Poren genutzt, durch die ein Diffusionsprozess stattfindet. Im Vergleich zu anderen Entgasungsverfahren, wie dem Vakuumverdampfen, lässt sich der Diffusionsprozess mit sehr geringem Energieeinsatz durchführen, da als Triebkraft lediglich ein Partialdruckgefälle an der Membran erforderlich ist. Bei der Entgasung von Druckfluiden, wie Hydrauliköl in Hydrauliksystemen, kann der im System zur Verfügung stehende Druck zur Steigerung der Partialdruckdifferenz genutzt werden. Mittels der erfindungsgemäßen Vorrichtung, bei der die Entgasung durch Überströmen einer Membran mit dem Fluid erfolgt, lässt sich der Entgasungsvorgang in vorteilhafter Weise innerhalb des Systems durchführen, und zwar sowohl in einem Bypass des Drucksystems als auch in einem Hauptvolumenstrom des Systems.

Die bei der erfindungsgemäßen Vorrichtung benutzte permeable Membran kann einen Silikonwerkstoff aufweisen, vorzugsweise vollständig aus Silikon bestehen.

Bei besonders vorteilhaften Ausführungsbeispielen ist für die Abstützung der permeablen Membran ein Stützkörper vorgesehen, der aus einem Drahtgewebe, einem Sintermetall, einer Keramik oder einer anderen Struktur besteht, die jeweils Durchlässe oder Poren aufweist, deren freier Querschnitt einen Gasdurchtritt erlaubt.

Die permeable Membran kann mit ihrem Stützkörper in einem Behälter eine Fluidseite von einer Gasseite separieren, oder die Membran kann eine Fluidführung umfassen. Dergestalt kann der Entgasungsvorgang an einem Volumenstrom eines Hydrauliksystems erfolgen, der durch eine Rohrleitung strömt, die vom rohrförmigen Stützkörper ummantelt ist, an dessen Innenseite die permeable Membran anliegt, die den freien Rohrquerschnitt vom äußeren Stützkörper flüssigkeitsdicht trennt.

Bei vorteilhaften Ausführungsbeispielen beträgt der Permeationskoeffizient Q der Silikonmembran 200 bis 600 x 10⁻¹⁷ m²/s/Pa, vorzugsweise im Wertebereich zwischen 300 bis 400 x 10⁻¹⁷m²/s/Pa, und liegt besonders bevorzugt im Wertebereich zwischen 370 und 380 x 10⁻¹⁷m²/s/Pa. Eine mit Vorteil einsetzbare Silikonmembran ist als Silopren®LSR 2640 im Handel erhältlich.

Mit besonderem Vorteil kann der hydrostatische Antrieb einen Vierquadrantenbetrieb ermöglichen.

Die federbelastete Differential-Kolbenpumpe kann für ihren Antrieb auf ihrer größeren Kolbenfläche mit dem Druck der Niederdruckseite des Niederdruckspeichers beaufschlagbar sein. Der Systemdruck der Niederdruckseite liefert dadurch den Antrieb für die Fördereinrichtung.

Die Gasseite des Behälters kann Umgebungsdruck aufweisen oder an eine Unterdruckeinrichtung angeschlossen sein, die die Partialdruckdifferenz an der Membran erhöht.

In besonders vorteilhafter Weise kann diese Unterdruckeinrichtung eine weitere federbelastete Differential-Kolbenpumpe aufweisen, die für ihren Antrieb auf ihrer größeren Kolbenfläche mit dem Druck der Niederdruckseite des Niederdruckspeichers beaufschlagbar ist und die in ihrer Bewegung mit der ersten Differential-Kolbenpumpe drucksynchronisiert ist. Der Systemdruck der Niederdruckseite liefert dadurch auch den Antrieb für die Unterdruckeinrichtung.

Nachstehend ist die Erfindung anhand von in der Zeichnung dargestellten Ausführungsbeispielen im Einzelnen erläutert. Es zeigen:
- Fig. 1: schematisch vereinfacht und in Symboldarstellung den Hydraulikschaltplan eines ersten Ausführungsbeispiels der erfindungsgemäßen Entgasungsvorrichtung;
- Fig. 2 bis 4: in der Fig. 1 entsprechender Darstellungsweise den Schaltplan für ein zweites bzw. drittes bzw. viertes Ausführungsbeispiel der Erfindung; und
- Fig. 5: einen Längsschnitt eines Rohrabschnitts einer Fluidführung mit einem fünften Ausführungsbeispiel der erfindungsgemäßen Entgasungsvorrichtung.

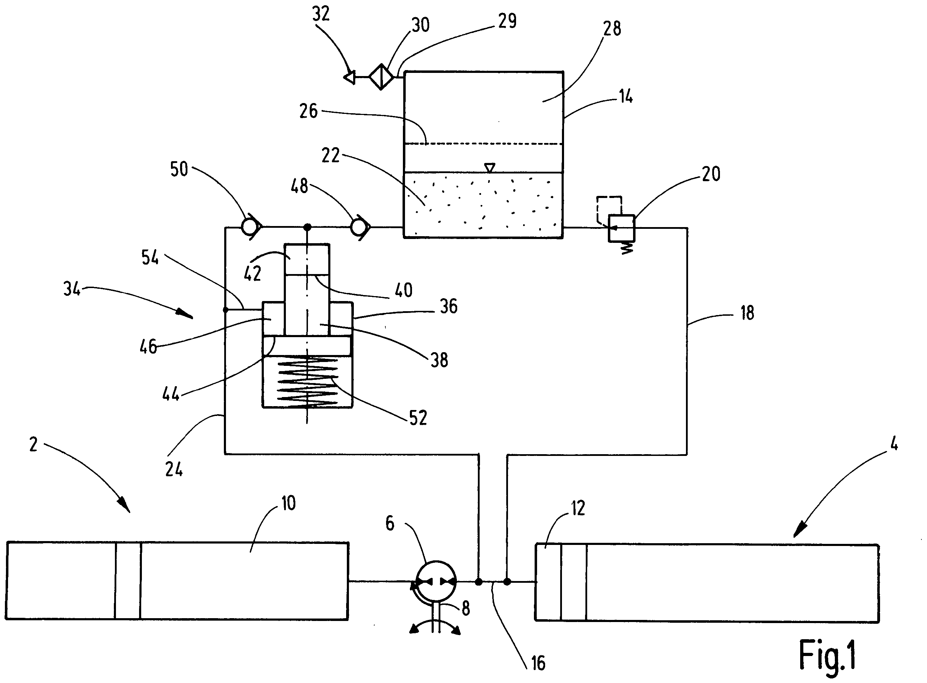

Mit Bezug auf die Fig. 1 bis 4 der Zeichnungen ist die Erfindung an Beispielen erläutert, bei denen die Entgasungsvorrichtung Bestandteil der Energie-Rückgewinnungseinrichtung bei einem hydrostatischen Antriebssystem ist. Wie in dem Dokument DE 10 2008 062 836 B3 offenbart ist, die ein Beispiel eines derartigen Antriebssystems zeigt, weisen solche Systeme in Verbindung mit einem hydropneumatischen Hochdruckspeicher 2 und einem hydropneumatischen Niederdruckspeicher 4 einen durchschwenkbaren Vierquadrantenantrieb 6 auf, der über eine Welle 8 mit einem Radantrieb gekuppelt ist. Hochdruckspeicher 2 und Niederdruckspeicher 4 sind mit ihrer Ölseite 10 bzw. 12 mit dem Vierquadrantenantrieb 6 verbunden, der bei Bremsvorgängen im Pumpbetrieb zur Speicherung von Bremsenergie den Hochdruckspeicher 2 auflädt, und für Beschleunigungsvorgänge als vom Druckfluid des Hochdruckspeichers angetriebener Hydromotor arbeitet, von dem entspanntes Fluid zum Niederdruckspeicher 4 gelangt. Dieser wiederum liefert für die Bremsenergie speichernde Ladevorgänge des Hochdruckspeichers 2 das Fluidvolumen. Im Betrieb ändert sich bei diesen Arbeitsspielen der Energie-Rückgewinnungseinrichtungen der Druck im Niederdruckspeicher 4 zwischen etwa 3 bar und etwa 15 bar.

Die zugehörige, erfindungsgemäße Entgasungsvorrichtung weist bei diesen Ausführungsbeispielen einen Behälter 14 auf, zu dem zur Entgasung Fluid 22 von der Niederdruckseite 16 der Energie-Rückgewinnungseinrichtung her über eine Leitung 18 zuführbar ist, die über ein Druckbegrenzungsventil 20 in den Grund des Behälters 14 einmündet. Aus dem Behälter 14 ist das Fluid 22 über eine weitere Leitung 24 zur Niederdruckseite 16 rückführbar. Die Entgasungsvorrichtung bildet bei dieser Anordnung einen Bypass zur Niederdruckseite 16 des zugeordneten Systems.

Im Behälter 14 trennt eine Membran 26 den das zu entgasende Fluid 22 enthaltenden Raum von einem Raum 28, der die gasförmige Phase, die mittels Diffusion durch die Membran 26 hindurchgetreten ist, aufnimmt. Von der Oberseite des Raums 28 gelangt diese aus dem Fluid 22 entgaste Luft über eine Leitung 29 und über ein Entlüftungsfilter 30 zur Umgebung 32. Das Druckbegrenzungsventil 20 ist auf einen Wert eingestellt, bei dem der anliegende Druck der Niederdruckseite 16 auf einen Wert reduziert ist, der dem für den Diffusionsprozess gewünschten Partialdruckgefälle an der Membran 26 entspricht, also dem Druckgefälle gegenüber dem im Raum 28 herrschenden Umgebungsdruck.

In der Leitung 24, die für das Rückströmen des Fluids 22 aus dem Behälter 14 zur Niederdruckseite vorgesehen ist, befindet sich eine Fördereinrichtung 34. Diese weist beim Beispiel von Fig. 1 eine Differential-Kolbenpumpe 36 auf, deren Differentialkolben 38 mit seiner kleineren Kolbenfläche 40 in einem Verdrängerraum 42 für das zu fördernde Fluid 22 geführt ist, während die größere Kolbenfläche 44 in einem Antriebsraum 46 geführt ist. Der Verdrängerraum 42 ist über ein als Saugventil wirkendes Rückschlagventil 48 mit dem Grund des Behälters 14 und über ein als Druckventil wirkendes Rückschlagventil 50 mit der zur Niederdruckseite 16 zurückführenden Leitung 24 verbunden. Eine Druckfeder 52 spannt den Differentialkolben 38 in Richtung auf die Verkleinerung des Volumens des Verdrängerraums 42 vor. Über einen Abzweig 54 sind der Antriebsraum 46 und damit die größere Kolbenfläche 44 mit dem Druck der Niederdruckseite 16 des Systems beaufschlagt. Die Wirkung der Druckfeder 52 ist so gewählt, dass bei Betriebsphasen, bei denen der Druck der Niederdruckseite 16 unter einem Schwellenwert liegt, die Druckfeder den Kolben 38 zur Verkleinerung des Volumens des Verdrängerraums 42 bewegt, während bei Betriebsphasen mit den gegebenen Wert übersteigendem Druck der Niederdruckseite 16 der Druck im Antriebsraum 46 den Kolben 38 gegen die Wirkung der Druckfeder 52 bewegt, so dass sich bei wechselnden Betriebsphasen ein Arbeitsspiel der Kolbenpumpe 36 einstellt, wodurch ein Durchstrom des zu entgasenden Fluids 22 durch den Behälter 14 stattfindet.

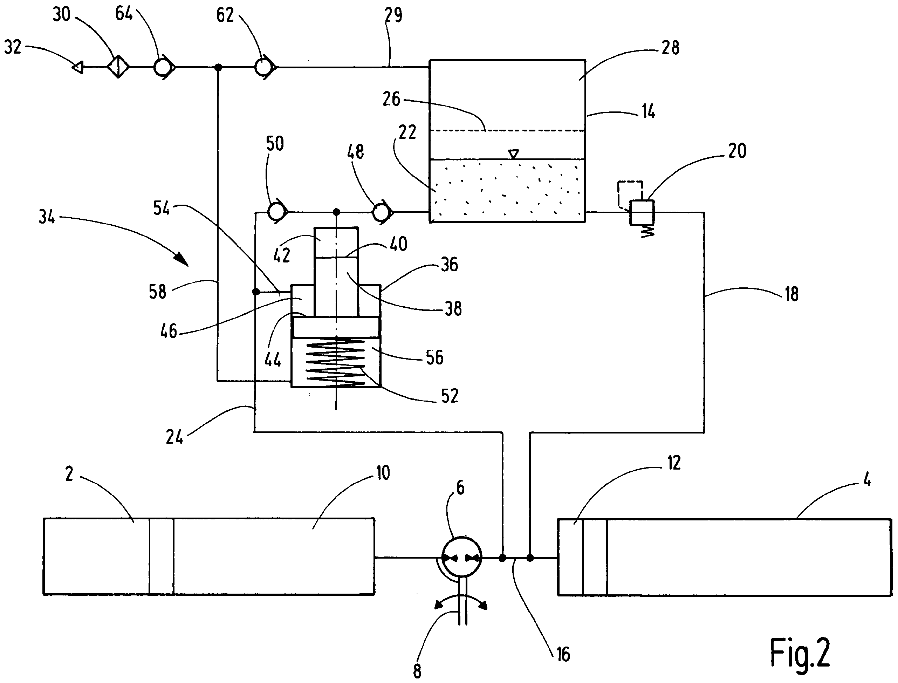

Das Ausführungsbeispiel von Fig. 2 unterscheidet sich vom ersten Beispiel lediglich insofern, als Luft, die bei Bewegungen des Differentialkolbens 38 aus dem die Druckfeder 52 enthaltenden Raum 56 der Kolbenpumpe 36 verdrängt wird und gegebenenfalls mit Schmierstoffanteilen kontaminiert ist, nicht ungefiltert zur Umgebung gelangt. An diesem Raum 56 ist daher eine Leitung 58 angeschlossen, die mit der Leitung 29 in Verbindung ist, die die entgaste Luft aus dem Raum 28 des Behälters 14 abführt. Dabei ist die Leitung 58 an der Leitung 29 zwischen zwei Rückschlagventilen 62 und 64 angeschlossen, die jeweils zur Umgebung 32 hin druckbetätigt öffnen. Bei dieser Anordnung bildet die Differential-Kolbenpumpe 36 nicht nur die Fördereinrichtung 34 für den Fluidtransport, sondern bildet gleichzeitig eine Unterdruckeinrichtung, die bei Kolbenbewegungen, bei denen sich das Volumen des die Druckfeder 52 enthaltenden Raumes 56 vergrößert, in der Leitung 58 einen Unterdruck erzeugt, der über das dadurch öffnende Rückschlagventil 62 und über die Leitung 29 auch im Raum 28 des Behälters 14 und damit an der Membran 26 wirksam ist.

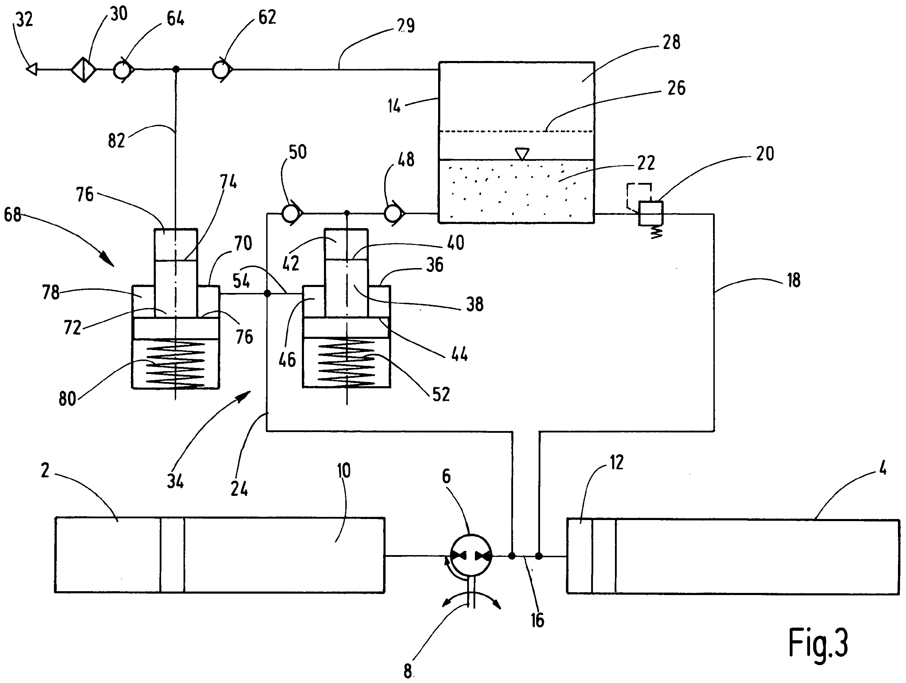

Bei dem Ausführungsbeispiel von Fig. 3 ist außer der Differential-Kolbenpumpe 36, die die Fördereinrichtung 34 bildet, als Unterdruckeinrichtung 68 eine zweite Differential-Kolbenpumpe 70 vorgesehen. Wie bei der ersten Kolbenpumpe 36, wirkt der Differentialkolben 72 mit seiner kleineren Kolbenfläche 74 in einem Verdrängerraum 76, während sich die größere Kolbenfläche 76 in einem Antriebsraum 78 bewegt. Dieser ist, ebenso wie der Antriebsraum 46 der ersten Kolbenpumpe 36, mit dem Druck der Niederdruckseite 16 beaufschlagt. Wie bei der ersten Kolbenpumpe 36 ist der Kolben 72 für eine das Volumen des Antriebsraums 78 verkleinernde Bewegung durch eine Druckfeder 80 vorgespannt. Bei dieser Anordnung wirkt die zweite Kolbenpumpe 70 mit ihrem Verdrängerraum 76, der über eine Saugleitung 82 mit der Leitung 29 in einem zwischen den Rückschlagventilen 62 und 64 gelegenen Stelle verbunden ist, als Saugpumpe, die in der Leitung 29 und damit an der im Behälter 14 befindlichen Membran 26 einen Unterdruck erzeugt.

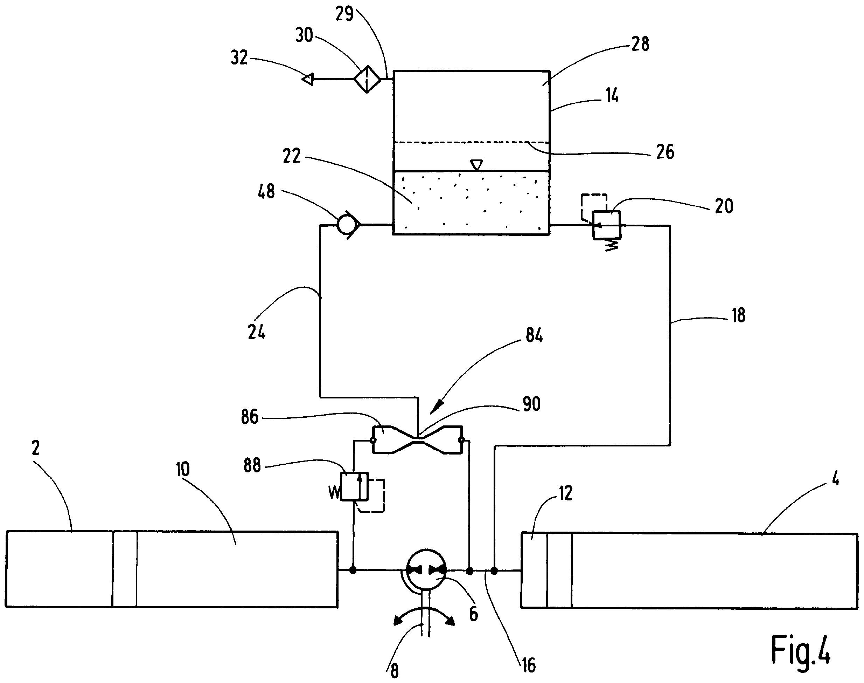

Die Fig. 4 zeigt ein Ausführungsbeispiel, bei dem die Fördereinrichtung 84 eine Venturidüse 86 aufweist, durch die in einem Bypass zum Vierquadrantenantrieb 6 ein Volumenstrom von der Ölseite 10 des Hochdruckspeichers 2 zur Niederdruckseite 16 hin strömt, wobei der Volumenstrom auf eine geringe Stärke mittels eines Druckreduzierventils 88 auf einen Wert begrenzt ist, der ausreicht, um am Sauganschluss 90 der Venturidüse 86 einen Unterdruck zu erzeugen, der zu einem Abstrom von entgastem Fluid 22 über die Leitung 24 zur Niederdruckseite 16 hin führt.

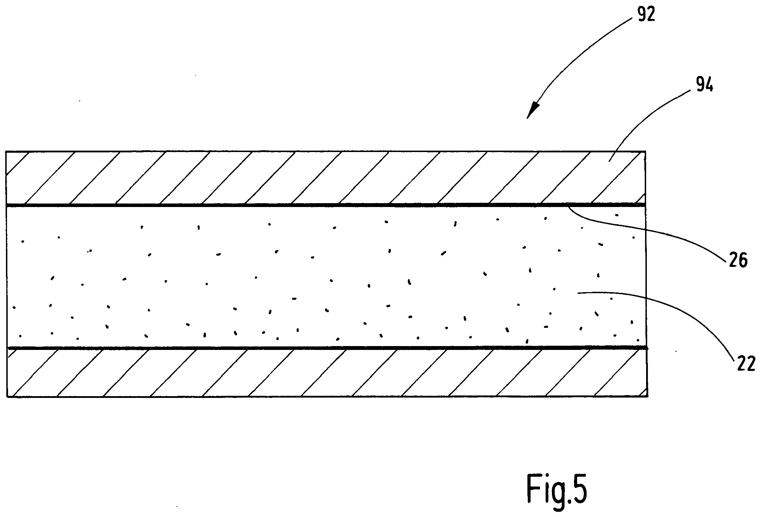

Das Ausführungsbeispiel von Fig. 5 ermöglicht eine Entgasung innerhalb einer Fluidführung eines (nicht gezeigten) Fluidsystems. Die Membran 26 bildet hierbei die flüssigkeitsdichte Ummantelung des Innenraums eines Rohrabschnitts 92, dessen äußere Rohrwand für die Membran 26, die innenseitig mit dem Druck des zu entgasenden Fluids 22 beaufschlagt ist, einen Stützkörper 94 bildet. Dieser ist beim vorliegenden Beispiel durch ein Sintermetall gebildet, das eine den Luftdurchtritt ermöglichende Porosität aufweist. Anstelle eines Sintermetalls könnte als Werkstoff für den Stützkörper 94 ein Drahtgewebe, ein poröser Keramikwerkstoff oder eine andere Struktur vorgesehen sein, die Durchlässe oder Poren für einen Gasdurchtritt aufweist.

Wie bei den zuvor beschriebenen Beispielen kann die Membran 26 mit Vorteil aus einem Silikonmaterial mit einer Dicke von 1 mm bis 2 mm ausgebildet sein, beispielsweise aus Silopren®LSR 2640, wobei die Materialdicke so gewählt ist, dass der Permeationskoeffizient Q in einem günstigen Wertebereich, vorzugsweise im Bereich zwischen 370 und 380 x 10⁻¹⁷ m²/s/Pa liegt.

## Patentansprüche

1. Entgasungsvorrichtung zum Entfernen von Gasen, wie Umgebungsluft, aus Fluiden, wie Öl, bestehend aus mindestens einer permeablen Membran (26), die das aus dem Fluid (22) zu entfernende Gas durchlässt und den Flüssigkeitsanteil des Fluids zurückhält, wobei ein Niederdruck- (4) und ein Hochdruck-Hydrospeicher (2) vorgesehen sind, die als Energie-Rückgewinnungseinrichtung gasseitig an einen hydrostatischen Antrieb (6, 8) angeschlossen sind, und wobei die permeable Membran (26) eine Entgasung des Fluids (22) auf der Niederdruckseite (16) der Energie-Rückgewinnungseinrichtung vornimmt, **dadurch gekennzeichnet, dass** die Niederdruckseite (16) der Energie-Rückgewinnungseinrichtung an einen Behälter (14) mit der permeablen Membran (26) auf seiner Fluideingangsseite angeschlossen ist und dass die Flüssigkeitsausgangsseite (29) des Behälters (14) an eine Fördereinrichtung (34, 84) in Form einer federbelasteten Differential-Kolbenpumpe (36) oder einer Venturidüse (86) angeschlossen ist.

2. Entgasungsvorrichtung nach Anspruch 1, **dadurch gekennzeichnet, dass** die permeable Membran (26) einen Silikonwerkstoff aufweist, vorzugsweise vollständig aus Silikon besteht.

3. Entgasungsvorrichtung nach Anspruch 1 oder 2, **dadurch gekennzeichnet, dass** die permeable Membran (26) sich an einem Stützkörper (94) abstützt, bestehend aus
- einem Drahtgewebe;
- einem Sintermetall;
- einem Kunststoffmaterial; oder
- einer Keramik,
allesamt mit Durchlässen oder Poren, deren freier Querschnitt einen Gasdurchtritt erlaubt.

4. Entgasungsvorrichtung nach Anspruch 3, **dadurch gekennzeichnet, dass** die permeable Membran (26) mit ihrem Stützkörper (94) in dem Behälter (14) eine Fluidseite von einer Gasseite (28) separiert oder eine Fluidführung (92) umfasst.

5. Entgasungsvorrichtung nach einem der Ansprüche 2 bis 4, **dadurch gekennzeichnet, dass** der Permeationskoeffizient Q der Silikonmembran (26) zwischen 200 bis 600 x 10⁻¹⁷ m²/s/Pa beträgt, vorzugsweise im Wertebereich zwischen 300 bis 400 x 10⁻¹⁷ m²/s/Pa, besonders bevorzugt im Wertebereich zwischen 370 und 380 x 10⁻¹⁷ m²/s/Pa liegt.

6. Entgasungsvorrichtung nach einem der vorstehenden Ansprüche **dadurch gekennzeichnet, dass** der hydrostatische Antrieb (6, 8) einen Vierquadrantenbetrieb ermöglicht.

7. Entgasungsvorrichtung nach einem der vorstehenden Ansprüche, **dadurch gekennzeichnet, dass** die federbelastete Differential-Kolbenpumpe (36) für ihren Antrieb auf ihrer größeren Kolbenfläche (44) mit dem Druck der Niederdruckseite (16) des Niederdruck-Hydrospeichers (4) beaufschlagbar ist.

8. Entgasungsvorrichtung nach einem der Ansprüche 4 bis 7, **dadurch gekennzeichnet, dass** die Gasseite (28) des Behälters (14) Umgebungsdruck (32) aufweist oder an eine Unterdruckeinrichtung (56, 58; 68; 84) angeschlossen ist.

9. Entgasungsvorrichtung nach einem der vorstehenden Ansprüche, **dadurch gekennzeichnet, dass** die Unterdruckeinrichtung (68) eine weitere federbelastete Differential-Kolbenpumpe (70) aufweist, die für ihren Antrieb auf ihrer größeren Kolbenfläche (76) mit dem Druck der Niederdruckseite (16) des Niederdruck-Hydrospeichers (4) beaufschlagbar ist und die in ihrer Bewegung mit der ersten Differential-Kolbenpumpe (36) drucksynchronisiert ist.

## Claims

1. Degasifying apparatus for removing gases, such as ambient air, from fluids, such as oil, consisting of at least one permeable membrane (26), which allows the gas to be removed from the fluid (22) to pass through and retains the liquid portion of the fluid, a low-pressure (4) and a high-pressure hydraulic accumulator (2) being provided, said accumulators being connected to a hydrostatic drive (6, 8) on the gas side as an energy recovery device, and wherein the permeable membrane (26) carries out degasification of fluids (22) on the low-pressure side (16) of the energy recovery device, **characterised in that** the low-pressure side (16) of the energy recovery device is connected to a container (14) with the permeable membrane (26) on its liquid inlet side and **in that** the liquid outlet side (29) of the container (14) is connected to a conveying device (34, 84) in the form of a spring-loaded differential piston pump (36) or a Venturi nozzle (86).

2. Degasifying apparatus according to claim 1, **characterised in that** the permeable membrane (26) comprises a silicone material, or preferably consists entirely of silicone.

3. Degasifying apparatus according to either claim 1 or claim 2, **characterised in that** the permeable membrane (26) is supported on a support body (94), consisting of
- a wire mesh;
- a sintered metal;
- a plastics material; or
- a ceramic,
all with openings or pores with a free cross-section that allows gas to pass through.

4. Degasifying apparatus according to claim 3, **characterised in that** the permeable membrane (26) with its support body (94) in the container (14) separates a fluid side from a gas side (28) or surrounds a fluid flow (92).

5. Degasifying apparatus according to any one of claims 2 to 4, **characterised in that** the permeation coefficient Q of the silicone membrane (26) is between 200 to 600 x 10⁻¹⁷ m²/s/Pa, preferably in the range between 300 to 400 x 10⁻¹⁷ m²/s/Pa, more preferably in the range between 370 and 380 x 10⁻¹⁷ m²/s/Pa.

6. Degasifying apparatus according to any one of the preceding claims, **characterised in that** the hydrostatic drive (6, 8) permits four-quadrant operation.

7. Degasifying apparatus according to any one of the preceding claims, **characterised in that** the pressure on the low-pressure side (16) of the low-pressure hydraulic accumulator can be applied to the spring-loaded differential piston pump (36) for its drive on its larger piston surface (44).

8. Degasifying apparatus according to any one of claims 4 to 7, **characterised in that** the gas side (28) of the container (14) is at ambient pressure (32) or is connected to a vacuum device (56, 58; 68; 84).

9. Degasifying apparatus according to any one of the preceding claims, **characterised in that** the vacuum device (68) comprises another spring-loaded differential piston pump (70) to which the pressure on the low-pressure side (16) of the low-pressure hydraulic accumulator (4) can be applied for its drive on its larger piston surface and which is synchronised in terms of pressure in its movement with the first differential piston pump (36).

## Revendications

1. Dispositif de dégazage pour éliminer des gaz, comme de l'air ambiant, de fluides, comme de l'huile, constitué d'au moins une membrane (26) perméable, que le gaz à éliminer du fluide (22) traverse et qui retient la partie liquide du fluide, dans lequel il est prévu un hydro-accumulateur (4) de basse pression et un hydro-accumulateur de haute pression, qui sont raccordés, comme dispositifs de récupération d'énergie, du côté du gaz, à un entraînement (6, 8) hydrostatique, et dans lequel la membrane (26) perméable effectue un dégazage du fluide (22) du côté (16) de basse pression du dispositif de récupération d'énergie, **caractérisé en ce que** le côté (16) de basse pression du dispositif de récupération d'énergie est raccordé à un récipient (14) ayant la membrane (26) perméable sur son côté d'entrée de fluide et **en ce que** le côté (29) de sortie de liquide du récipient (14) est raccordé à un dispositif (34, 84) de refoulement, sous la forme d'une pompe (36) à piston différentielle soumise à l'action d'un ressort ou d'une buse (86) venturi.

2. Dispositif de dégazage suivant la revendication 1, **caractérisé en ce que** la membrane (26) perméable comporte un matériau de silicone, en étant constituée de préférence entièrement en silicone.

3. Dispositif de dégazage suivant la revendication 1 ou 2, **caractérisé en ce que** la membrane (26) perméable s'appuie sur une pièce (94) d'appui, constituée
- d'une toile métallique ;
- d'un métal fritté
- d'une matière plastique ; ou
- d'une céramique,
ayant toutes des perforations ou des pores, dont la section transversale libre rend possible un passage du gaz.

4. Dispositif de dégazage suivant la revendication 3, **caractérisé en ce que** la membrane (26) perméable sépare, par sa pièce (94) d'appui, dans le récipient (14), un côté fluide d'un côté (28) gaz ou comprend une conduite (92) de fluide.

5. Dispositif de dégazage suivant l'une des revendications 2 à 4, **caractérisé en ce que** le coefficient Q de perméation de la membrane (26) en silicone va de 200 à 600 × 10⁻¹⁷ m²/s/Pa, en étant de préférence dans la plage de valeurs allant de 300 à 400 × 10⁻¹⁷ m²/s/Pa, d'une manière particulièrement préférée dans la plage de valeurs allant de 370 et 380 x 10⁻¹⁷ m²/s/Pa.

6. Dispositif de dégazage suivant l'une des revendications précédentes, **caractérisé en ce que** l'entraînement (6, 8) hydrostatique rend possible un fonctionnement à quatre cadrans.

7. Dispositif de dégazage suivant l'une des revendications précédentes, **caractérisé en ce que** la pompe (36) à piston différentielle soumise à l'action d'un ressort est, pour son entraînement, soumise, sur sa plus grande surface (44) de piston, à la pression du côté (16) basse pression de l'hydro-accumulateur de basse pression.

8. Dispositif de dégazage suivant l'une des revendications 4 à 7, **caractérisé en ce que** le côté (28) gaz du récipient (14) a la pression (32) ambiante ou est raccordé à un dispositif (56, 58 ; 68 ; 84) en dépression.

9. Dispositif de dégazage suivant l'une des revendications précédentes, **caractérisé en ce que** le dispositif (68) en dépression a une autre pompe (70) à piston différentielle soumise à l'action d'un ressort, qui, pour son entraînement, peut être soumise, sur sa surface (76) de piston la plus grande, à la pression du côté (16) basse pression de l'hydro-accumulateur de basse pression et qui, dans son mouvement, est synchronisée en pression avec la première pompe (36) à piston différentielle.
